# EUROPEAN PATENT APPLICATION

(11) **EP 1 717 721 A1**
(43) Date of publication of application: **02.11.2006**
(21) Application number: 05709470.8
(22) Date of filing: 28.01.2005
(51) Int. Cl.: G06F 19/00, G06F 3/00, H04N 5/91

(54) **CONTENT CREATION DEVICE AND CONTENT CREATION METHOD**

(30) Priority: 05.02.2004 JP 2004029867
(71) Applicant: MATSUSHITA ELECTRIC INDUSTRIAL CO., LTD., Osaka 571-8501 (JP)
(72) Inventor: SUGIURA, Masataka Mat. Elec. Ind. Co., Ltd., IPROC, Chuo-ku, Osaka-shi, Osaka 540-6319 (JP); TSUKAMOTO, Yoshihiro Mat. Elec. Ind. Co., Ltd., Chuo-ku, Osaka-shi, Osaka 540-6319 (JP); NUNOSHITA, Masaoki Mat. Elec. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/001244
(87) International publication number: WO 2005/076188

(57) **Abstract**

A content creation apparatus (10) has a playback control module (32) which plays back a multimedia template; an input module (26) which accepts a user's instruction relating to selection of media data to be inserted into the multimedia template during playback of the multimedia template by the playback control module (32); a control module (30) which inserts the media data accepted through the input module (26) and plays back the multimedia template by the playback control module (32); and a scenario transforming module (38) which creates multimedia contents based on the multimedia template and confirmed media data in accordance with confirmation of the media data selected through the input module (26).

## Description

### Technical Field

The present invention relates to an apparatus and a method of creating multimedia contents.

### Background of the Invention

Traditionally, multimedia contents formed of media data such as images, voice, and character strings are used in a cellular telephone, for example. A method is known that allows ordinary users to easily create such multimedia contents. This method is disclosed in JP-A-2003-281461, for example.

This patent reference describes a method which provides a user with a multimedia template including a basic part that cannot be modified and an area that can be edited by the user and allows the user to select media data that are applied to the editable area in the multimedia template. In the method described in the patent reference above, when a multimedia template to be an edit object is read out, editable timing and selectable media data are listed and presented to a user to accept an input of editing operation by the user. Then, after finishing the edit of the multimedia template, edited multimedia data is previewed, as necessary. After that, the edit is ended when the user instructs the end of the edit, and the edited multimedia data is outputted.

### Disclosure of the Invention

In the method described in the patent reference above, after all the inputs of the editing operation are accepted, a preview is displayed, as necessary. Therefore, the contents to be completed are not known when the editing operation is done, and it is difficult to select media data matched with details of the multimedia template. Particularly, since an input/output interface is limited in a personal digital assistant, it is difficult to play back both of a multimedia template and media data to be selectable at the same time to confirm details. Accordingly, it is difficult to select media data matched with a multimedia template to create multimedia contents.

In view of the background above, an object of the invention is to provide a content creation apparatus and a content creation method which can select media data matched with a multimedia template to create contents.

A content creation apparatus according to the invention comprising: a playback means which plays back a multimedia template into which media data can be inserted; a media data accepting means which accepts a user's instruction relating to selection of media data to be inserted into the multimedia template during playback of the multimedia template by the playback means; a control means which inserts media data selected through the media data accepting means to the multimedia template and allows the playback means to play back the multimedia template; and a multimedia content creating means which creates multimedia contents based on the multimedia template and confirmed media data in accordance with confirmation of the media data selected through the media data accepting means.

The playback means may stop playback of the multimedia template from time when a user instructs starting selection of media data to time when selection of media data is completed.

The content creation apparatus according to the invention may have a means which encourages a user to select media data relating to a time period to allow insertion of the media data during playback of the multimedia template. Here, for the means which encourages selection, (1) it may stop playback of the multimedia template at the time to start the time period to allow insertion; (2) it may present a user that it is a time period to allow accepting selection of media data during the time period to allow insertion; and (3) it may display information about potential media data to be selectable on a screen.

In the content creation apparatus according to the invention, the playback means may display an area into which media data is inserted as an image on a multimedia template that is being played back. The content creation apparatus may accept insertion of media data into the insertion area in accordance with selection of an image in the insertion area displayed in the insertion area.

In the content creation apparatus according to the invention, the control means may shift a position to start playback of media data selected through the media data accepting means from a top of the media data by an amount of elapsed time to play back the multimedia template from time to start playback of a part to allow insertion of media data to time to accept media data by the media data accepting means .

In the content creation apparatus according to the invention, the media data accepting means may accept an instruction to use a moving picture or a still image that is being shot by an image pickup means as media data to be inserted into the multimedia template.

A content creation method according to the invention comprising steps of: playing back a multimedia template into which media data can be inserted; accepting an input of a user's instruction relating to selection of media data to be inserted into the multimedia template during playback of the multimedia template; inserting media data selected by the inputted user's instruction to the multimedia template and playing back the multimedia template; and creating multimedia contents based on the multimedia template and confirmed media data in accordance with confirmation of the media data selected by the inputted user's instruction.

A program according to the invention is a program which creates multimedia contents, the program allows a computer to implement processes of: playing back a multimedia template into which media data can be inserted; accepting an input of a user's instruction relating to selection of media data to be inserted into the multimedia template during playback of the multimedia template; inserting media data selected by the inputted user's instruction to the multimedia template and playing back the multimedia template; and creating multimedia contents based on the multimedia template and confirmed media data in accordance with confirmation of the media data selected by the inputted user's instruction.

As described below, the invention has other embodiments. Therefore, the disclosure of the invention intends to partially provide embodiments according to the invention, and it does not intend to limit the scope of the invention described here and claimed.

### Brief Description of the Drawings

Fig. 1 is a diagram illustrating the configuration of a content creation apparatus of a first embodiment;
Fig. 2 is a diagram illustrating an exemplary scenario for a template;
Fig. 3 is diagrams illustrating exemplary display screens for template playback;
Fig. 4 is a diagram illustrating the operation of the content creation apparatus;
Fig. 5 is a diagram illustrating the operation of the content creation apparatus;
Fig. 6 is a diagram illustrating the operation of the content creation apparatus;
Fig. 7 a diagram illustrating the operation of the content creation apparatus;
Fig. 8 is a diagram illustrating the operation of the content creation apparatus;
Fig. 9 is a diagram illustrating an exemplary screen to select a template;
Fig. 10A is a diagram illustrating an exemplary screen during playback of the template;
Fig. 10B is a diagram illustrating of an exemplary screen to select an edit object;
Fig. 10C is a diagram illustrating an exemplary screen to select an image;
Fig. 10D is a diagram illustrating an exemplary screen during playback of the template;
Fig. 11A is a diagram illustrating an exemplary screen to select an edit object;
Fig. 11B is a diagram illustrating an exemplary screen to input text;
Fig. 11C is a diagram illustrating an exemplary screen during playback of the template;
Fig. 11D is a diagram illustrating an exemplary screen for confirming a destination to store contents;
Fig. 12 is a diagram illustrating template selected information temporarily stored;
Fig. 13 is diagram illustrating an exemplary scenario for contents;
Fig. 14 is diagrams illustrating exemplary display screens in content playback;
Fig. 15 is a diagram illustrating an exemplary scenario for a template of a second embodiment;
Fig. 16 is diagrams illustrating exemplary display screens for template playback;
Fig. 17 is a diagram illustrating the operation of a content creation apparatus;
Fig. 18 is a diagram illustrating the operation of the content creation apparatus;
Fig. 19 is a diagram illustrating the operation of the content creation apparatus;
Fig. 20 is a diagram illustrating the operation of the content creation apparatus;
Fig. 21 is a diagram illustrating an exemplary scenario for contents;
Fig. 22 is diagrams illustrating exemplary display screens in content playback;
Fig. 23 is a diagram illustrating an exemplary scenario for contents;
Fig. 24 is diagrams illustrating exemplary display screens in content playback;
Fig. 25 is a diagram illustrating the change in contents due to media data insertion in the second embodiment;
Fig. 26 is a diagram illustrating the change in contents due to media data insertion in a modified example of the second embodiment;
Fig. 27 is a diagram illustrating another exemplary screen during playback of a template; and
Fig. 28 is a diagram illustrating a template scenario of the modified example.

### Best Mode for Carrying out the Invention

Hereinafter, the detailed description of the invention will be described. However, the detailed description and the accompanying drawings will not limit the invention. Instead, the scope of the invention is defined by the scope of the appended claims.

A content creation apparatus of this embodiment has a playback means which plays back a multimedia template into which media data can be inserted; a media data accepting means which accepts a user's instruction relating to selection of media data to be inserted into the multimedia template during playback of the multimedia template by the playback means; a control means which inserts media data selected through the media data accepting means to the multimedia template and allows the playback means to play back the multimedia template; and a multimedia content creating means which creates multimedia contents based on the multimedia template and confirmed media data in accordance with confirmation of the media data selected through the media data accepting means.

With this configuration, selection of media data is accepted during playback of the multimedia template, and the selected media data is inserted to play back the multimedia template. Therefore, media data matched with the multimedia template can be selected as the multimedia template to be created is confirmed. Furthermore, since it is the configuration that does not create multimedia contents until the selected media data is confirmed, the media data once selected can be easily changed to the other media data newly selected. When the configuration is formed that saves the selection history of media data, the operation that undoes selected data facilitates insertion and playback of media data selected before.

The playback means may stop playback of the multimedia template from the time when a user instructs starting selection of media data to the time when selection of media data is completed.

With this configuration, since playback of the multimedia template is stopped during selection of media data, the user can take time to select media data.

This content creation apparatus may have a means which encourages a user to select media data relating to a time period to allow insertion of media data during playback of the multimedia template.

With this configuration, the user can be encouraged to select media data. For example, it is possible to tell a user that a time period to allow insertion of media data will be started before that time period is started and to encourage the user to select media data.

The means which encourages selection may stop playback of a multimedia template at a time to start the time period to allow insertion.

With this configuration, media data can be selected at the timing to start the time period to allow insertion.

The means which encourages selection may represent a user that it is a time period to allow accepting selection of media data during the time period to allow insertion.

With this configuration, it can be represented to user that media data can be selected. Particularly, in the case where the area into which media is inserted is not displayed on a screen to play back the multimedia template such as voice, this configuration is effective.

The means which encourages selection may display information about potential media data to be selectable on the screen.

With this configuration, media data can be selected quickly.

In this content creation apparatus, the playback means may display the insertion area into which media data is inserted as an image on the multimedia template that is being played back.

With this configuration, since the area into which media data is inserted is reported in the multimedia template, media data matched with that area can be selected.

The media data accepting means may accept insertion of media data into the insertion area in accordance with selection of an image in the insertion area displayed in the multimedia template.

With this configuration, an interface to select media data can be made easier to understand when there are multiple insertion areas in the multimedia template that is being played back. Thus, for example, it can reduce the possibility to put the selected media data in an insertion area different from the intended insertion area.

In this content creation apparatus, the control means may shift the position to start playback of media data selected through the media data accepting means from the top of the media data by the amount of elapsed time to play back a multimedia template from time to start playback of the part to allow insertion of media data to time to accept the media data by the media data accepting means.

With this configuration, since the position to start playback of media data is shifted in accordance with the elapsed time from the time to start playback of the part to allow insertion, the selected user media data can be played back as synchronized and combined with fixed media (such as background images and BGM) specified by the template regardless of the timing at which media data has been selected.

In this content creation apparatus, the media data accepting means may accept an instruction by which a moving picture or a still image that is being shot by an image pickup means is allowed to be media data to be inserted into the multimedia template.

With this configuration, an image that is being shot is used as it is, and multimedia contents can be created.

A content creation method of the embodiment comprising steps of: playing back a multimedia template into which media data can be inserted; accepting an input of a user's instruction relating to selection of media data to be inserted into the multimedia template during playback of the multimedia template; inserting media data selected by the inputted user's instruction to the multimedia template and playing back the multimedia template; and creating multimedia contents based on the multimedia template and confirmed media data in accordance with confirmation of the media data selected by the inputted user's instruction.

With this configuration, as similar to the content creation apparatus described above, media data matched with the multimedia template can be selected as the multimedia template to be created is confirmed. Moreover, it is possible to apply various configurations of the content creation apparatus described above to this content creation method.

A program of the embodiment is a program which creates multimedia contents, the program allows a computer to conduct processes of: playing back a multimedia template into which media data can be inserted; accepting an input of a user's instruction relating to selection of media data to be inserted into the multimedia template during playback of the multimedia template; inserting media data selected by the inputted user's instruction to the multimedia template and playing back the multimedia template; and creating moving picture contents based on the multimedia template and confirmed media data in accordance with confirmation of the media data selected by the inputted user's instruction.

With this configuration, as similar to the content creation apparatus described above, media data matched with the multimedia template can be selected as the multimedia template to be created is confirmed. Furthermore, it is possible to apply various configurations of the content creation apparatus described above to this program.

Hereinafter, a content creation apparatus of embodiments according to the invention will be described with reference to the drawings.

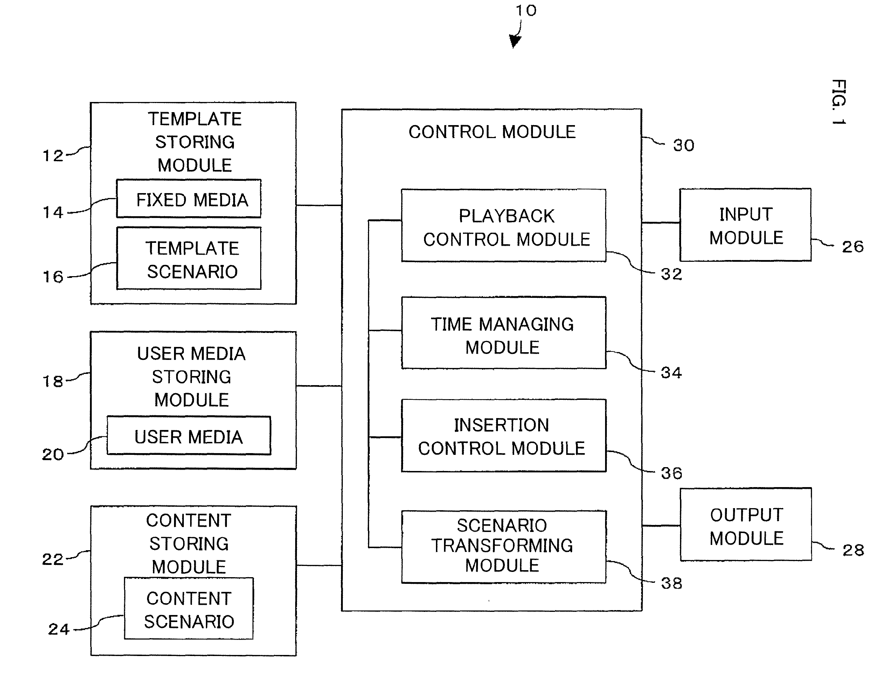

Fig. 1 is a diagram illustrating the configuration of a content creation apparatus 10. The content creation apparatus 10 is an apparatus which creates multimedia contents (hereinafter, it is called 'contents'). In the embodiment, the content creation apparatus 10 is a cellular telephone and a personal digital assistance, for example. As shown in Fig. 1, the content creation apparatus 10 has a template storing module 12 which stores a multimedia template (hereinafter, it is called a 'template'), a user media storing module 18 which stores user media 20, a content storing module 22 which stores a content scenario 24, an input module 26 and an output module 28 which configure a user interface, and a control module 30 which controls the entire apparatus.

The template storing module 12 stores therein a template scenario 16 which defines playback start time, playback finish time, and display areas for various items of media data such as a moving picture, still images, voice, and text, and media (hereinafter, it is called 'the fixed media') 14 which is played back in accordance with the template scenario 16. The fixed media 14 is played back in accordance with the template scenario 16 to play back a template.

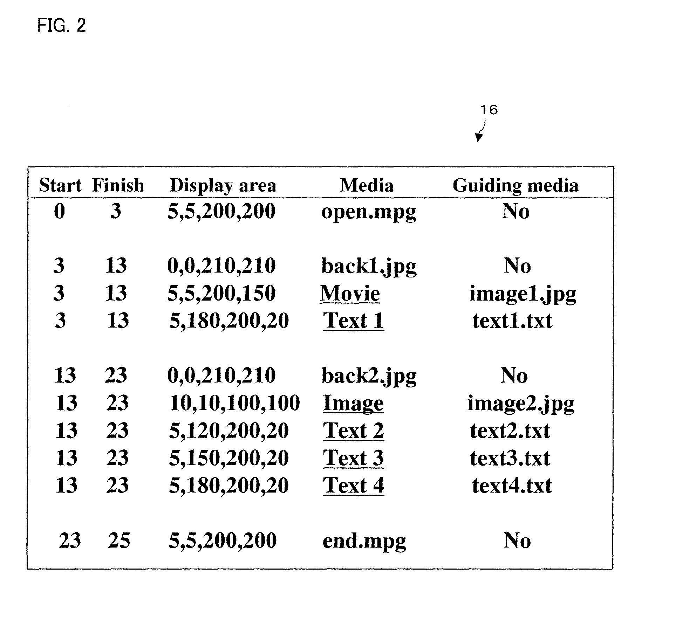

Fig. 2 is a diagram illustrating an exemplary template scenario 16. As shown in Fig. 2, the template scenario 16 is described with information about playback start time, playback finish time, and display areas for each item of media data forming a template. For example, for a moving picture of 'open.mpg' on the first line of the template scenario 16 shown in Fig. 2, it is described that playback start time is zero second, playback finish time is three seconds, and a display area is an area surrounded by (5,5,200,200).

In the template scenario 16, insertable parts into which media data can be inserted are defined. The insertable parts are defined by the time period and the insertion area that allow insertion of media data and information about types of media data to be inserted. In the embodiment, when the insertable part is played back, guiding media is displayed in the insertion area for media data. Therefore, the time period and the insertion area that allow insertion of media data can be recognized at first sight. The information about guiding media is also described in the template scenario 16. For example, on the third line of the template scenario 16 shown in Fig. 2, it is described that 'image.jpg' is displayed as guiding media in the insertion area (5,5,200,150) during playback time from 3 to 13 seconds. In addition, when media data to be inserted into the insertable part is selected, guiding media are not played back.

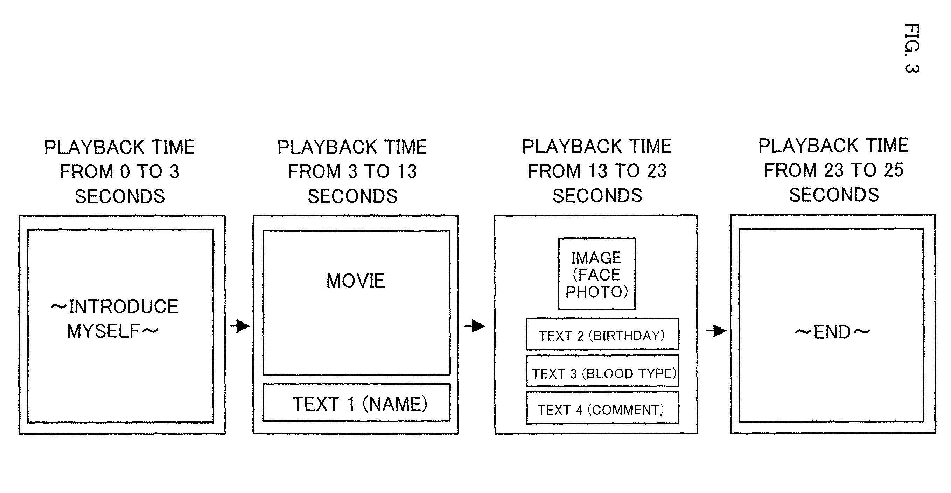

Fig. 3 is diagrams illustrating display screens when the template shown in Fig. 2 is played back. During playback time from 0 to 3 seconds, the fixed media 14 of 'open.mpg' is played back, and an image of '-introduce oneself-' is displayed as shown in Fig. 3. During playback time from 3 to 13 seconds, as described in the template scenario 16 shown in Fig. 2, the fixed media 14 of 'back1.jpg' and two items of guiding media are played back. As shown in Fig. 3, an image for the area described as 'movie' showing that it is a moving picture for the insertion area and an image for the area described as 'text 1 (name)' showing that it is the insertable area for text data are displayed.

Return to Fig. 1, the user media storing module 18 will be described. The user media storing module 18 stores therein user media 20 obtained by a user. The user media 20 is a moving picture downloaded through the Internet and the like, and is still images taken by an image pickup module, for example. The user media 20 stored in the user media storing module 18 is data that is potential media data to be inserted into the insertable part.

A content storing module 22 stores therein contents created by inserting media data into a template in the form of a content scenario 24. As similar to the template scenario 16, the content scenario 24 defines playback time and display areas for media data configuring contents.

Next, the configuration of the control module 30 will be described. In the control module 30, a playback control module 32 has a function to play back a template or contents. When media data to be inserted into the insertable part of the template is selected in playing back the template, the selected media data is inserted to play back the template.

In the control module 30, a time managing module 34 has a function to manage playback time for the template or contents that are being played back.

An insertion control module 36 has a function to allow selection of media data to be inserted into the insertable part.

A scenario transforming module 38 has a function to write media data that is confirmed to be inserted into the insertable part in the template scenario 16 and to create the content scenario 24.

As described above, the configuration of the content creation apparatus 10 of the embodiment has been described. In addition, the content creation apparatus 10 of the embodiment can be implemented by installing a program into a computer, the program having modules to implement each of the components shown in Fig. 1. Programs like this are also included in the scope of the invention.

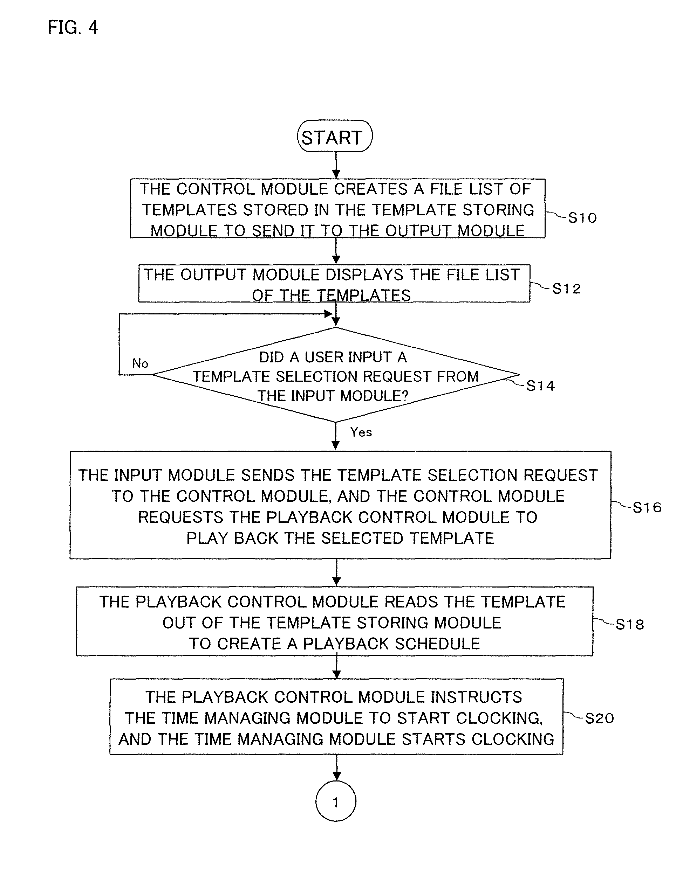

Next, the operation of the content creation apparatus 10 of the embodiment will be described. Figs. 4 to 8 are flow charts illustrating the operation of the content creation apparatus 10.

As shown in Fig. 4, first, the control module 30 of the content creation apparatus 10 creates a file list of templates stored in the template storing module 12, and sends the created file list of the templates to the output module 28 (S10) . The output module 28 receives the file list to display the file list of the templates (S12).

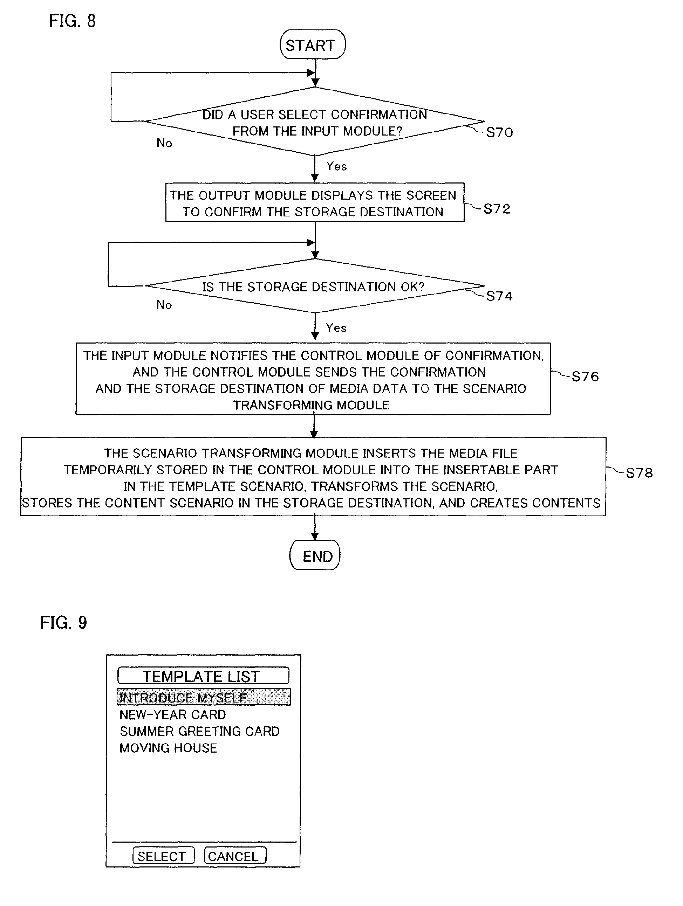

Fig. 9 is a diagram illustrating an exemplary screen of the file list of the templates displayed by the output module 28. As shown in Fig. 9, on the template list screen, names of templates stored in the template storing module 12 are listed such as templates for introducing oneself and new-year cards. When one template is selected on the screen to press a selection button, the input module 26 sends a template selection request to the control module 30, and the template to be an edit object is selected.

The control module 30 of the content creation apparatus 10 determines whether a user has inputted the template selection request from the input module 26 (S14). The control module 30 repeats the determination until the user inputs the selection request, and waits for the template selection request by the user. In addition, when a 'cancel button' is selected on the screen shown in Fig. 9, the operation of the content creation apparatus 10 is ended.

When the user selects a template and the input module 26 inputs a template selection request, the input module 26 sends the template selection request to the control module 30. The control module 30 then receives this to request the playback control module 32 to play back the selected template (S16).

When the playback control module 32 receives the request for playing back the template from the control module 30, and it reads the selected template out of the template storing module 12 to create a playback schedule (S18). In the description below, suppose the template shown in Fig. 2 is selected. The playback control module 32 instructs the time managing module 34 to start clocking, and the time managing module 34 then receives the instruction to start clocking the time elapsed from the start of playback (S20).

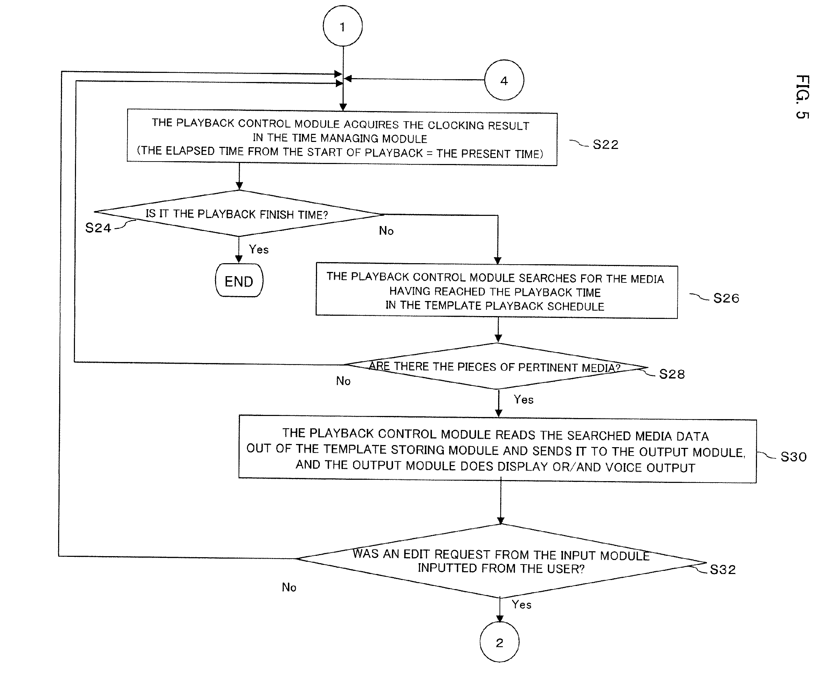

Continuously, the operation of the content creation apparatus 10 will be described with reference to Fig. 5. The playback control module 32 acquires the clocking result in the time managing module 34 (S22). The playback control module 32 determines whether or not it is playback finish time based on the clocking result (S24). In the example shown in Fig. 2, the playback finish time for the template is 25 seconds. Thus, the playback control module 32 determines that it is the playback finish time when the clocking result is 25 seconds or longer, whereas it determines that it is not the playback finish time when the clocking result is less than 25 seconds. As the result of the determination, when it is determined that the clocking result is the playback finish time, the operation of the content creation apparatus 10 is ended.

When the clocking result is not the playback finish time, the playback control module 32 searches for the fixed media 14 and guiding media having reached the playback time in the template playback schedule (S26). Searching here is done based on the playback start time for each item of media for the template. In the example shown in Fig. 2, when the clocking result is three seconds, the fixed media 14 of 'back1.jpg' and the guiding media of 'image. jpg' and 'text1.txt' are searched. The playback control module 32 determines whether there are the pieces of the pertinent media based on the search result of the media having reached the playback time (S28). As the result of the determination, it is determined that there are the pieces of the pertinent media, the playback control module 32 reads the searched media data out of the template storing module 12 and sends it to the output module 28. The output module 28 outputs the pertinent media received from the playback control module 32 (S30). The output module 28 conducts output in the form in accordance with the types of the pertinent media. For example, it outputs voice when the pertinent media is voice, whereas it outputs image display and voice when the pertinent media is moving picture. In addition, when it is determined that there is not the pertinent media, the operation of the content creation apparatus 10 moves to the step of acquiring the clocking result (S22). Up to this step, it is the operation that the content creation apparatus 10 accepts selection of the template to play back the selected template.

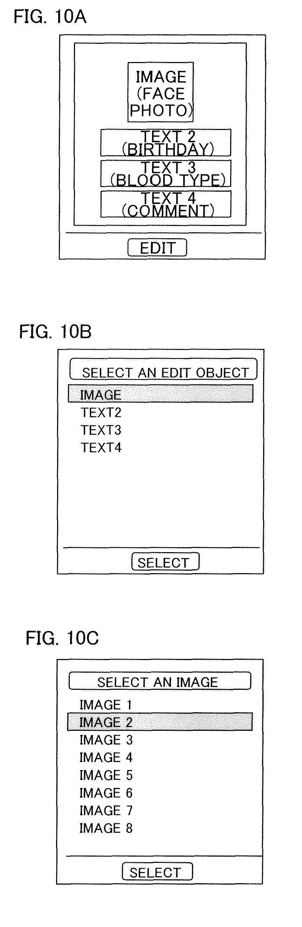

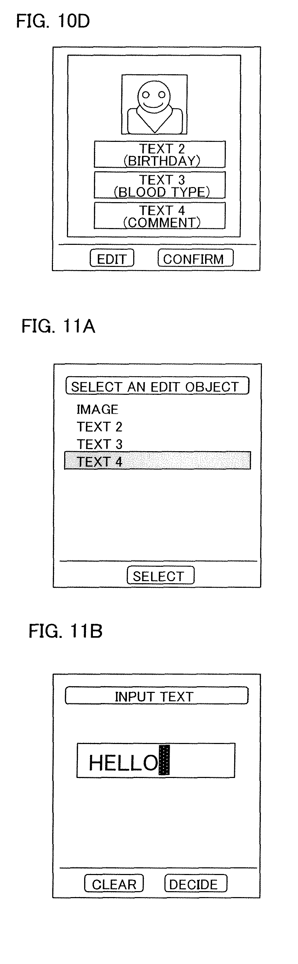

Then, the operation will be described when a request for editing is made during playback of the template. In the description below, exemplary display screens shown in Figs. 10A to 10D and Figs. 11A to Fig. 11D will be described along with operation flows.

As shown in Fig. 5, the content creation apparatus 10 determines whether an edit request by a user has been inputted to the input module 26 during playback of the template (S32). In order to accept the edit request, the output module 28 displays an edit button in the part of the screen during playback of the template. The edit button configures the input module 26 for inputting the edit request. In Fig. 10A, the edit button is shown in the lower part of the template playback area. In addition, Fig, 10A is an exemplary screen that is playing back the template shown in Fig. 2 in the playback time from 13 to 23 seconds. When the edit button is pressed, the edit request is inputted to the input module 26.

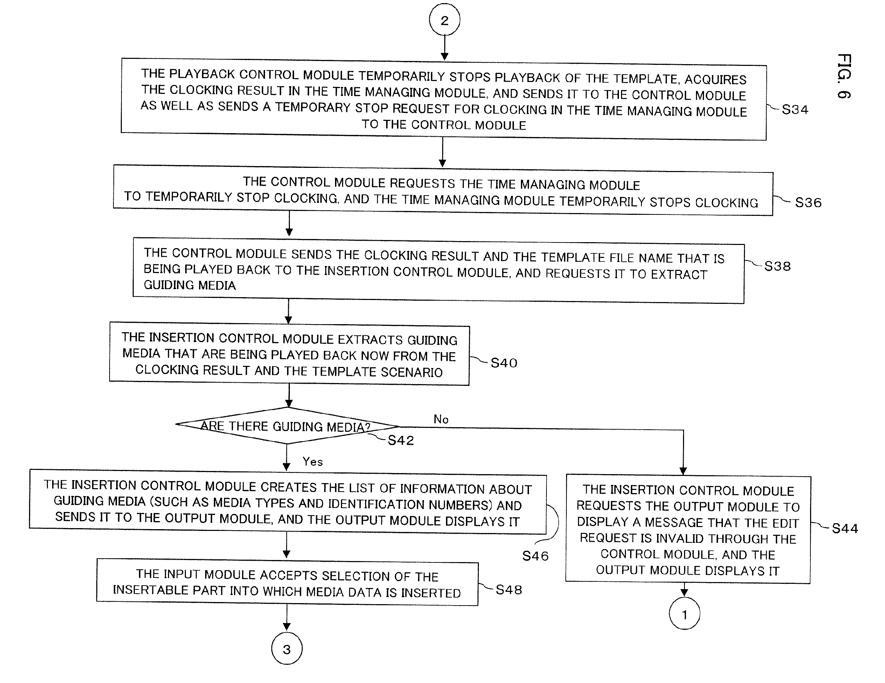

In Step S32 that determines whether the edit request has been inputted, when it is determined that the edit request has not been inputted, the operation of the content creation apparatus 10 moves to the step of acquiring the clocking result (S22), and continues to play back the template. When it is determined that the edit request has been inputted to the input module 26, the operation moves to the flow shown in Fig. 6.

As shown in Fig. 6, when the edit request is inputted, the playback control module 32 temporarily stops playback of the template. The playback control module 32 acquires the clocking result in the time managing module 34, and sends it to the control module 30. The playback control module 32 sends a temporary stop request for clocking in the time managing module 34 to the control module 30 (S34). The control module 30 requests the time managing module 34 to temporarily stop clocking in accordance with the request from the playback control module 32. When the time managing module 34 receives the request for temporary stop from the playback control module 32, it temporarily stops clocking (S36).

Subsequently, the control module 30 requests the insertion control module 36 to extract guiding media (S38). At this time, the control module 30 sends to the insertion control module 36 the template file name that is being played back and the clocking result that shows the playback elapsed time at the present time. The insertion control module 36 uses the clocking result to determine the playback elapsed time at the present time, and extracts guiding media from the part of the template that is being played back (S40) . The insertion control module 36 determines whether guiding media have been extracted (S42). In the example shown in Fig. 2, it is determined that there are guiding media when the clocking result is 3 to 23 seconds, whereas it is determined there are no guiding media in the other time periods. By this determination, when it is determined that there are no guiding media, the insertion control module 36 notifies the control module 30 that the inputted edit request is invalid. The control module 30 displays the message saying that the edit request is invalid on the output module 28 (S44). The output module 28 displays a message that the edit is impossible now, for example.

In the embodiment, the reason why it is determined whether the edit request is valid or not in accordance with the determination result whether there are guiding media is because guiding media are played back in the insertable part for media data as described in Fig. 2. More specifically, since whether there are guiding media is matched with whether there is the insertable part, determining whether there are guiding media allows determination whether there is the insertable part. In addition, instead of determination based on whether there are guiding media, the configuration can also be formed that inquires the insertion control module 36 whether media data is insertable.

When it is determined that there are guiding media at the determination step (S42), the insertion control module 36 sends the list of the searched guiding media to the output module 28. The output module 28 then receives it, and displays the list of information about guiding media (such as media types and identification numbers) (S46). Fig. 10B is a screen that displays the list of guiding media on the screen at the time when the edit button is pressed. Guiding media is selected on the screen shown in Fig. 10B , and thus the insertable part for the edit object into which media data is inserted can be selected.

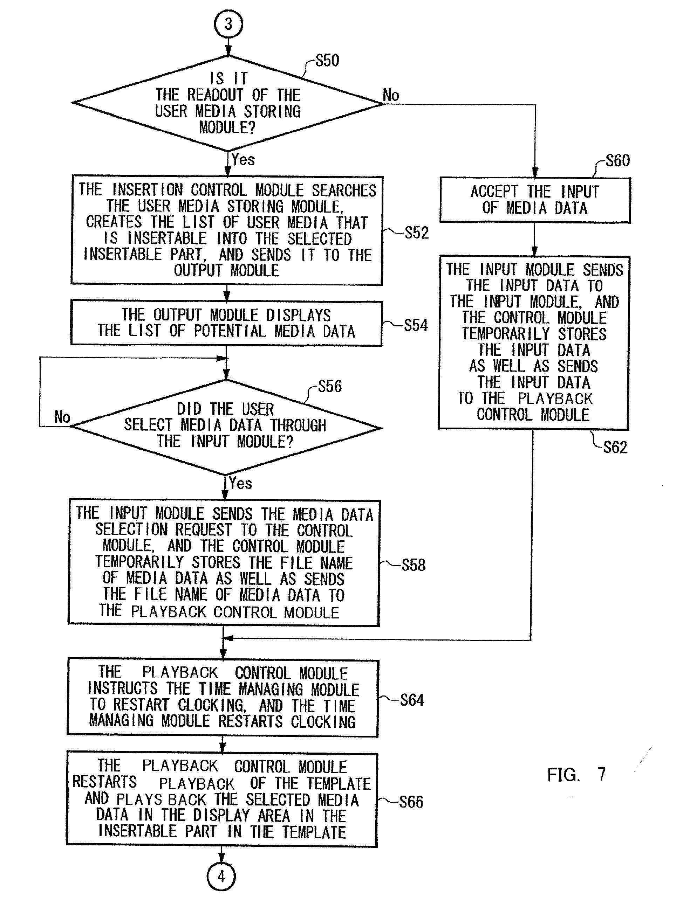

When a user selects an edit object on the screen shown in Fig. 10B, the input module 26 accepts the input of selection of the edit object (S48). When the input of selection of the edit object is accepted, the operation of the content creation apparatus 10 moves to the flow shown in Fig. 7. Here, suppose an image is selected as the edit object.

As shown in Fig. 7, when the input of selection of the edit object is accepted, the insertion control module 36 determines whether media data to be inserted into the insertable part of the template to be the edit object is read out of the user media storing module 18 (S50). In the embodiment, an example is shown that this determination is done in accordance with types of media data to be inserted. When media data to be inserted is other than text, it is read out of the user media storing module 18. When media data to be inserted is text, it is not read out of the user media storing module 18, but data inputted from the input module 26 is inserted. First, the case where media data is read out of the user media storing module 18 will be described.

When media data is read out of the user media storing module 18, the insertion control module 36 searches the user media storing module 18. Then, the insertion control module 36 creates the list of the searched user media 20, and sends it as potential media data that is insertable into the insertable part to the output module 28 (S52). Here, searching the user media 20 is done based on the types of media for the insertable part. In addition, searching may be done based on the size of the insertion area and the time length of the insertable part. The output module 28 having received the list of searched potential media data displays the list of the potential media data (S54).

Fig. 10C is a screen on which the list of potential media data is displayed to select media data to be inserted. Images 1 to 8 are shown as insertable images in the insertable part. On this screen, a single image is selected to press a selection button, and thus the image to be inserted can be selected.

Subsequently, the content creation apparatus 10 determines whether the selection of media data is inputted to the input module 26 (S56) . The content creation apparatus 10 repeats the determination until the user inputs the selection, and waits for the input of selection of media data by the user.

When the user selects any one of images, the input module 26 sends the selection request for media data to the control module 30. The control module 30 temporarily stores the file name of the selected media data as well as sends the file name of the selected media data to the playback control module 32 (S58).

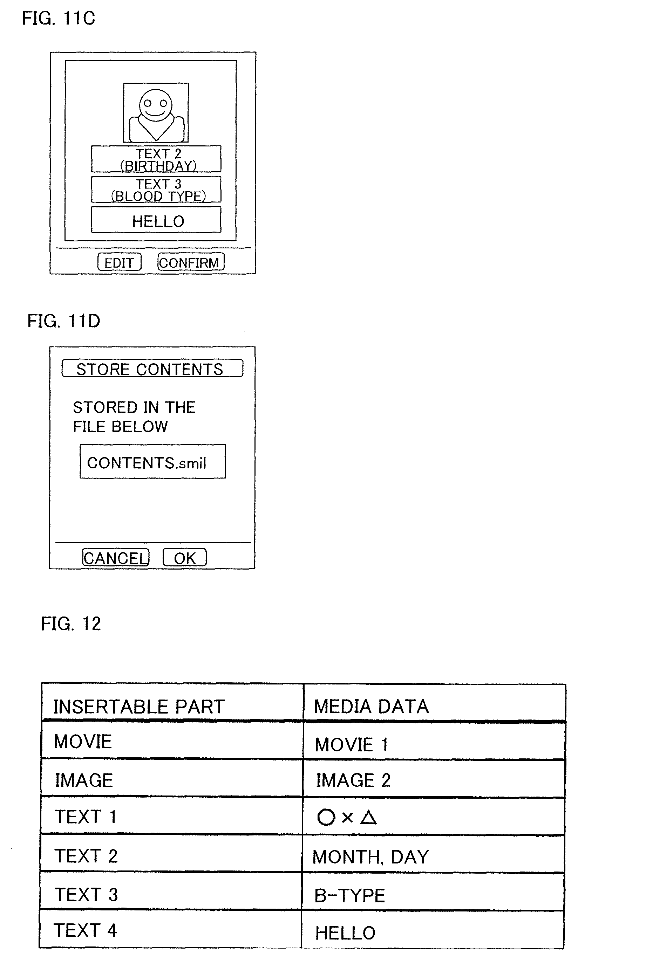

Fig. 12 is a diagram illustrating an exemplary storage area that is temporarily stored in the control module 30. As shown in Fig. 12, in the storage area of the control module 30, information about media data to be inserted into the individual insertable parts in the template is temporarily stored in accordance with the user's selection request. This information is rewritten when new media data is selected. In addition, when media data is rewritten, the configuration may be formed in which information about media data before rewritten is left as a selection history. Thus, the state before rewritten can be returned easily.

Subsequently, the playback control module 32 instructs the time managing module 34 to restart clocking, and the time managing module 34 then receives it to restart clocking (S64). The playback control module 32 restarts playback of the template at the point where the temporary stop is done. At this time, as shown in Fig. 10D, the selected media data is played back in the display area of the insertable part (S66) . In the insertable part where media data is selected, guiding media is not played back.

In addition, when media data to be inserted into the insertable part is a moving picture, the position to start playback of the selected moving picture is decided in accordance with the instruction from the time managing module 34. More specifically, the time managing module 34 computes the elapsed time from the point of starting playback of the insertable part to the point of temporarily stopping the playback at Step S36. The playback control module 32 starts playback of the selected moving picture at the position shifted from the top by the elapsed time computed by the time managing module 34. Therefore, the elapsed time to play back the insertable part at the point of restarting template playback is matched with the elapsed time from the position to start playback, and the same moving picture as the contents to be created can be previewed. When the template scenario 16 shown in Fig. 2 is taken and described as an example, suppose the point where the edit button is pressed to temporarily stop playback of the template is at the point of 8 seconds of playback time. Since playback of the insertable part is started at the point of 3 seconds of playback time, the time elapsed until playback of the template is temporarily stopped is 8 - 3 = 5 seconds. Thus, the selected moving picture is played back at the position where 5 seconds elapses from the top.

Next, the case where media data to be inserted into the selected insertable part is not read out of the user media storing module 18 will be described. In the embodiment, when the media type inserted into the insertable part is text, text data is not read out of the user media storing module 18, but it is inputted from the input module 26.

As shown in Fig. 11A, suppose text 3 is selected on the screen to select an edit object . The input module 26 notifies the control module 30 that text 3 is selected as an edit object. As shown in Fig. 7, the insertion control module 36 displays a screen to input text by the output module 28 (S60).

Fig. 11B is a diagram illustrating a screen to input text. When text is inputted on the screen shown in Fig. 11B and a decision button is pressed, the input module 26 sends text data to the control module 30. The control module 30 temporarily stores the text data sent from the input module 26 in the storage area shown in Fig. 12. In addition, the control module 30 sends the text data to the playback control module 32 (S62).

After that, the operation that the playback control module 32 allows the time managing module 34 to restart clocking (S64) and inserts text data to restart playback of the template (S66) is the same as the case where media data is read out of the user media storing module 18. As shown in Fig. 11C, the template into which text is inserted is played back.

In the embodiment, as the case where media data to be inserted is not read out of the user media storing module 18, the example is described that text inputted by a user is inserted when the type of media data to be inserted is text. However, it is merely an example. Also in the case where media data is a moving picture, still images or/and voice other than text, the configuration can be formed in which data inputted by a user is inserted from the input module 26.

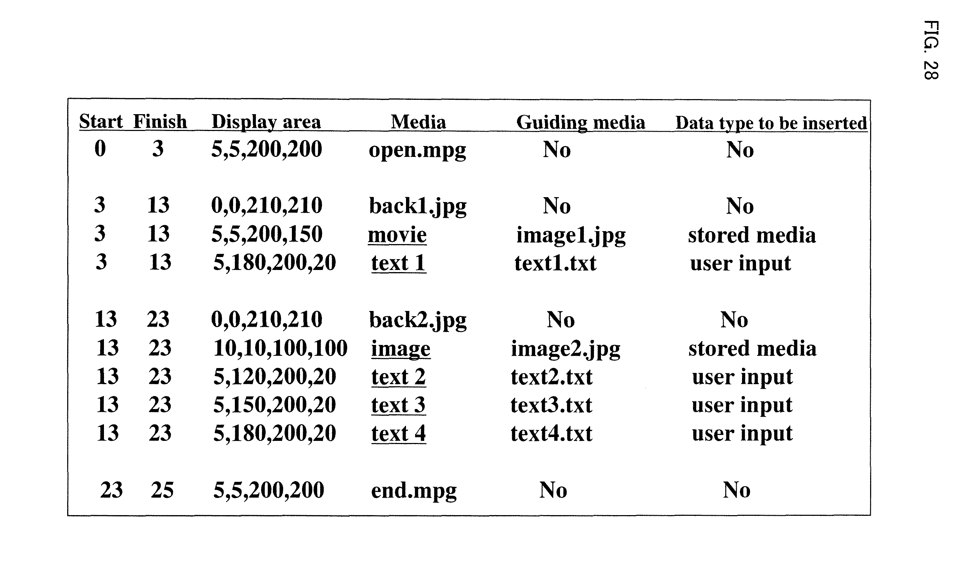

For the determination at S50 shown in Fig. 7 (whether to read media to be inserted out of the user media storing module 18), the example is described that determination is done in accordance with the types of insertable media data. However, as shown in Fig. 28, the configuration is feasible in which a parameter of 'insertion data type' is described in a template scenario to make determination at S50 based on the parameter. In this case, when the insertion data type is stored media' , media read out of the user media storing module 18 can be used as media to be inserted into the insertable part, whereas when the insertion data type is 'user input', media data inputted from the input module 26 can be specified.

In addition, regardless of whether media data is read out of the user media storing module 18 or it is directly inputted, a confirmation button is displayed on the screen where media data is inserted to play back the template (see Figs. 10D and 11C) in addition to the edit button. The confirmation button is a button that confirms creating the contents 24 with the media data selected and stores the contents 24.

The operation will be described when the confirmation button is pressed with the Fig. 8. The content creation apparatus 10 determines whether a user has pressed the confirmation button and confirmation has been inputted from the input module 26 (S70). The content creation apparatus 10 repeatedly makes the determination as long as the confirmation button is displayed.

When the user inputs confirmation of media data, the input module 26 notifies the control module 30 that confirmation is selected, and the control module 30 receives it to allow the output module 28 to display a screen to confirm a storage destination shown in Fig. 11D (S72). On this screen, the storage destination may be changed. The control module 30 determines whether the storage destination OK has been selected on the screen to confirm the storage destination (S74) . When the storage destination OK is selected, the input module 26 notifies the control module 30 that the storage destination is OK, and the control module 30 sends the confirmation and the storage destination of media data to the scenario transforming module 38 (S76). The scenario transforming module 38 then receives it, uses information about media data temporarily stored in the control module 30, rewrites the template scenario 16, creates the content scenario 24, and stores it in the storage destination as the specified data file name (S78). As described above, the content creation operation by the content creation apparatus 10 is completed.

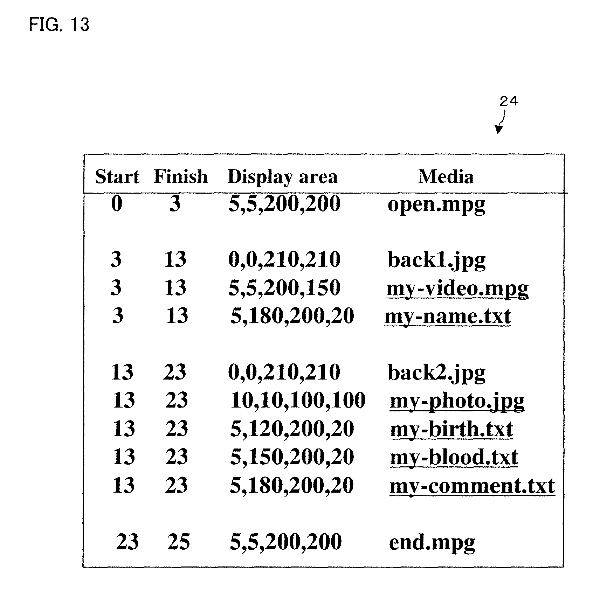

Fig. 13 is a diagram illustrating a created content scenario 24. As apparent from comparison with the template scenario 16 for the template shown in Fig. 2, the content scenario 24 shown in Fig. 13 is created by inserting media data selected by the user into the insertable part of the template (it is indicated by an underline in Fig. 13).

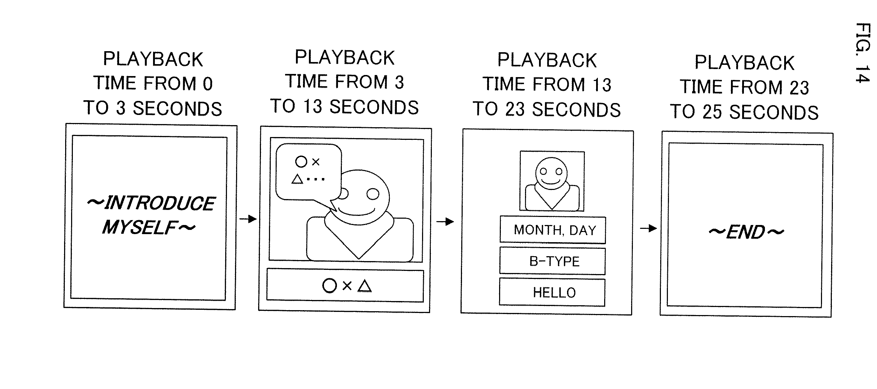

Fig. 14 is diagrams illustrating exemplary screens when contents are played back in accordance with the created content scenario 24. First, during playback time from 0 to 3 seconds, an image of '-introduce myself-' is displayed. This is the fixed media 14 for the template that is the base of the contents. During playback time from 3 to 13 seconds, the moving picture selected by the user and the name inputted by the user are displayed. During playback time from 13 to 23 seconds, the still image selected by the user and the birthday, blood type, and comments that are inputted by the user are displayed. Finally, during playback time from 23 to 25 seconds, an image of 'end' is displayed. This is the fixed media 14 for the template that is the base of the contents. In this manner, the media data selected by the user is inserted into the basic template to create the contents 24.

As discussed above, the content creation apparatus 10 of the first embodiment according to the invention has been described.

The content creation apparatus 10 of the first embodiment displays the edit button which accepts editing the template during playback of the template. In accordance with pressing down the edit button, media data to be inserted into the template is selected. The selected media data is inserted to play back the template. Accordingly, since media data to be inserted can be selected as the template that is being played back is seen, media data matched with the template can be selected.

The content creation apparatus 10 temporarily stores information about the selected media data in the storage area of the control module 30. In accordance with pressing down the confirmation button, information about the media data temporarily stored is used to create the content scenario 24. Accordingly, also in the insertable part where once media data is selected, it can be changed to another media data until media data is confirmed.

Next, a content creation apparatus 10 of a second embodiment according to the invention will be described.

Although the content creation apparatus 10 of the second embodiment has the same basic configuration as that of the content creation apparatus 10 of the first embodiment shown in Fig. 1, a method of inserting media data into a template is different.

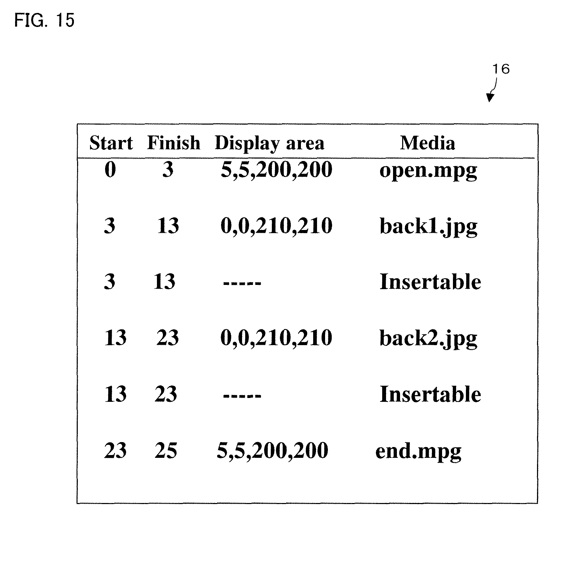

Fig. 15 is a diagram illustrating an exemplary template scenario 16 of the second embodiment. As similar to the template scenario 16 of the first embodiment, the template scenario 16 of the second embodiment has information about playback start time and finish time for each item of media and information about display areas. However, the template scenario 16 of the second embodiment does not have information about the display area for the insertable part, and does not have guiding media.

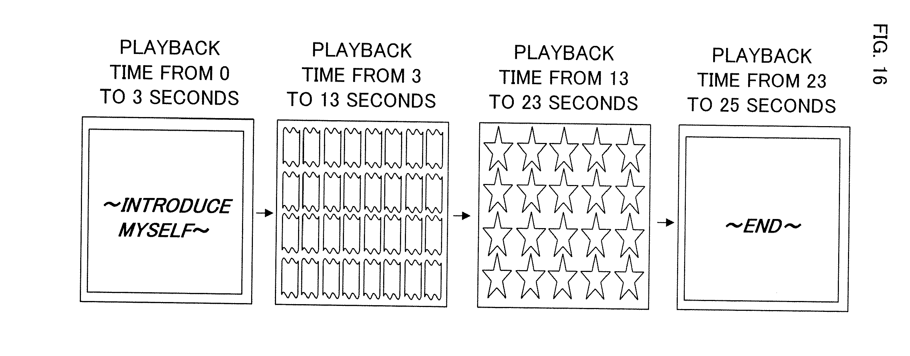

Fig. 16 is diagrams illustrating display screens when the template shown in Fig. 15 is played back. During playback time from 0 to 3 seconds, fixed media 14 of 'open.mpg' is played back, and an image of '-introduce myself~' is displayed as shown in Fig. 16. During playback time from 3 to 13 seconds, a background image of 'back1.jpg' is played back, and during playback time from 13 to 23 seconds, a background image of 'back2.jpg' is played back. During playback time from 3 to 23 seconds, although it is the time period to allow insertion for media data, guiding media are not displayed different from the first embodiment. During playback time from 23 to 25 seconds, the fixed media 14 of 'end.mpg' are played back, and an image of '-end-' is displayed as shown in Fig. 16.

Next, the operation of the content creation apparatus 10 of the second embodiment will be described.

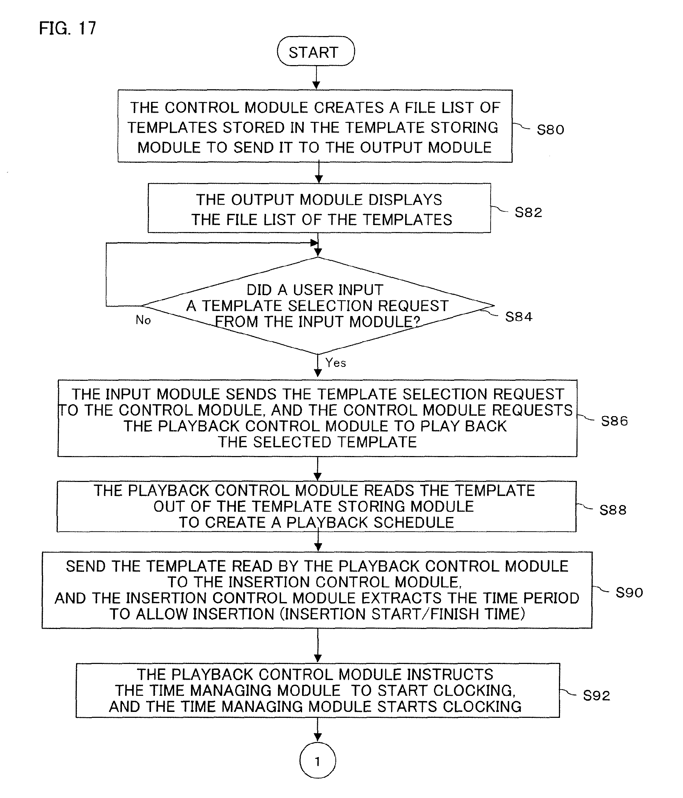

Figs. 17 to 20 are flow charts illustrating the operation of the content creation apparatus 10 of the second embodiment. As shown in Fig. 17, the content creation apparatus 10 creates a file list from information about the templates stored in a template storing module 12 (S80). The content creation apparatus 10 displays the created file list on the screen (S82), and repeatedly determines whether a user has inputted a template selection request (S84). When the template selection request is inputted, it requests a playback control module 32 to play back a template (S86), and the playback control module 32 creates a playback schedule based on the selected template (S88). The operation up to this step is the same as that of the first embodiment.

Subsequently, the content creation apparatus 10 sends the template read out by the playback control module 32 to an insertion control module 36, and the insertion control module 36 extracts information about the time period to allow insertion from the template (S90). In the example shown in Fig. 15, the playback time of 3 to 13 seconds and the playback time of 13 to 23 seconds are extracted as the time period to allow insertion. The insertion control module 36 stores information about the extracted time period to allow insertions. Then, the playback control module 32 instructs a time managing module 34 to start clocking, and allows the time managing module 34 to start clocking (S92).

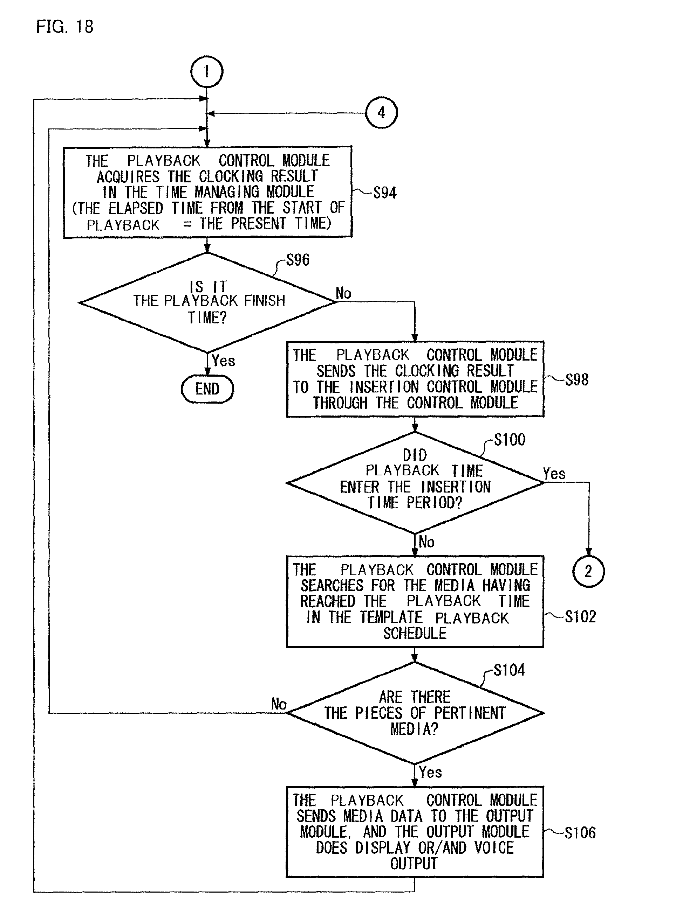

Moving to Fig. 18, the playback control module 32 acquires the clocking result of the time managing module 34 (S94), and determines whether the acquired clocking result is the playback finish time (S96) . As the result of determination, when the clocking result is the playback finish time, the operation of the content creation apparatus 10 is ended.

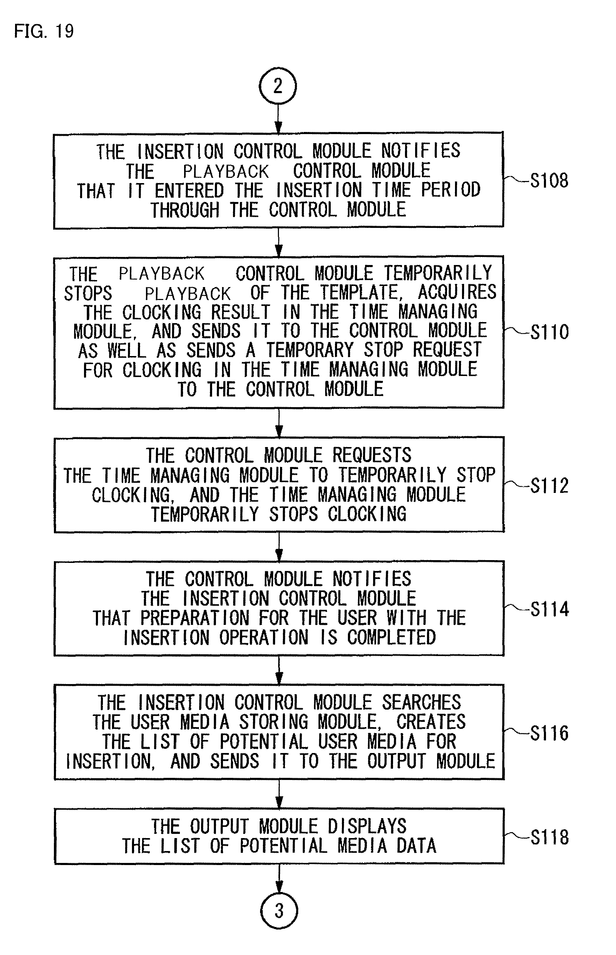

When the clocking result is not the playback finish time, the playback control module 32 sends the clocking result to the insertion control module 36 through a control module 30 (S98). The insertion control module 36 determines whether the playback time has entered the time period to allow insertion based on the clocking result and information about the time period to allow insertion extracted at Step S90 (S100). As the result of determination, when it is determined that it has not entered the time period to allow insertion, the playback control module 32 searches for media having reached the playback time in the playback schedule (S102), and determines whether there are the pertinent media (S104). When there are the media having reached the playback time, the playback control module 32 outputs the pertinent media (S106). When there is no media having reached the playback time, the playback control module 32 moves to Step S94 that the time managing module 34 acquires the clocking result. When it is determined that playback time has entered the time period to allow insertion, move to the flow chart shown in Fig. 19.

When it is determined that the playback time has entered the time period to allow insertion, the insertion control module 36 notifies the playback control module 32 that it has entered the time period to allow insertion through the control module 30 (S108) . The playback control module 32 then receives it to temporarily stop playback of the template, and acquires the clocking result in the time managing module 34. Subsequently, the playback control module 32 sends the clocking result in the time managing module 34 to the control module 30 as well as sends the temporarily stop request for the time managing module 34 (S110) . The control module 30 then receives it to request the time managing module 34 to temporarily stop clocking, and the time managing module 34 temporarily stops clocking (S112).

Then, the control module 30 notifies the insertion control module 36 that preparation for insertion operation is completed (S114). The insertion control module 36 searches the user media storing module 18 to create a list of the user media 20, and sends it as potential media data to the output module 28 (S116). The output module 28 displays the list of potential media data received from the insertion control module 36 (S118).

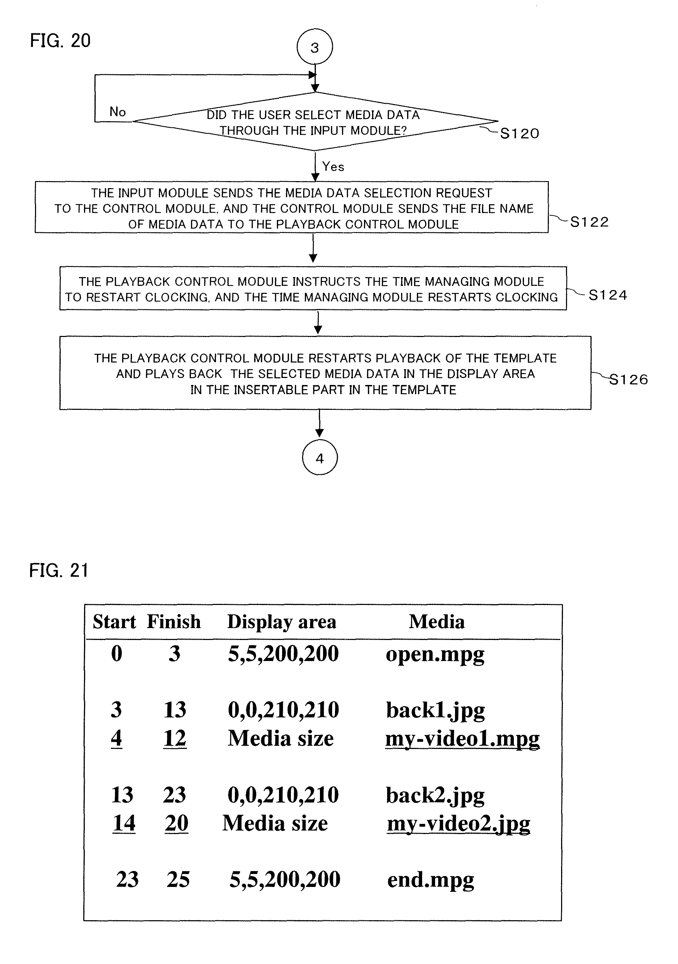

Continuously, the operation of the content creation apparatus 10 will be described with Fig. 20. The content creation apparatus 10 determines whether the user has selected media data from the input module 26 on the screen where the list of potential media data is displayed (S120). This determination is repeated until media data is selected, and wait for selection of media data.

When media data is selected, the input module 26 sends a selection request for media data to the control module 30, and the control module 30 sends the file name of media data to the playback control module 32 (S122).

Subsequently, the playback control module 32 instructs the time managing module 34 to restart clocking, and the time managing module 34 restarts clocking (S124). The playback control module 32 restarts playback of the template. At this time, the playback control module 32 plays back the selected media data as overlapped with the template (S126).

The operation when confirmation of media data is inputted during playback of the template is the same as that of the content creation apparatus 10 of the first embodiment.

Fig. 21 is a diagram illustrating a created content scenario 24. As apparent from comparison with the template scenario 16 for the template shown in Fig. 15, the content scenario 24 shown in Fig. 21 is created by inserting the media data selected by the user in the time period to allow insertion for the template (it is indicated by an underline shown in Fig. 21). For example, it is described that media data of 'my-video1.mpg' is played back from 4 to 12 seconds in the time period to allow insertion of playback time from 3 to 13 seconds.

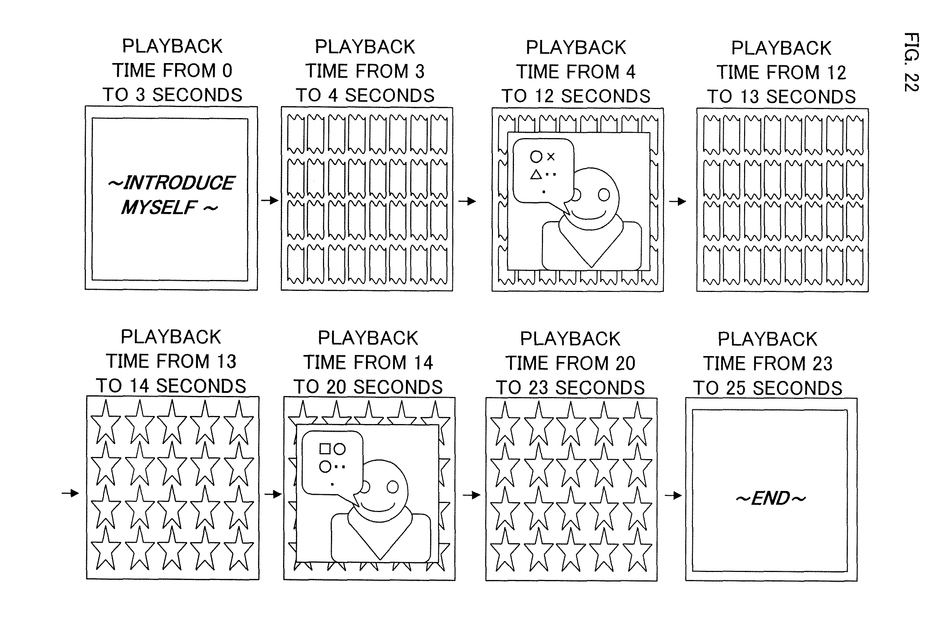

Fig. 22 is diagrams illustrating exemplary screens when the created contents 24 are played back. First, during playback time from 0 to 3 seconds, an image of '~introduce myself-' is displayed. This is the fixed media 14 for the template that is the base of the contents. During playback time from 3 to 13 seconds, a background image of 'back1.jpg' is played back and displayed, and media data of 'my-video1.mpg' selected by the user is played back and displayed as overlapped with the background image for playback time from 4 to 12 seconds in that playback time. During playback time from 13 to 23 seconds, a background image of back2.jpg' is played back and displayed, and media data of 'my-video2.mpg' selected by the user is played back and displayed as overlapped with the background image for playback time from 14 to 20 seconds in that playback time. Finally, during playback time from 23 to 25 seconds, an image of '-end-' is displayed. This is the fixed media 14 for the template that is the base of the contents. In this manner, the media data selected by the user is inserted into the basic template to create contents.

As discussed above, the content creation apparatus 10 of the second embodiment according to the invention has been described.

As similar to the content creation apparatus 10 of the first embodiment, since the content creation apparatus 10 of the second embodiment can select media data to be inserted as the template that is being played back is seen, media data matched with the template can be selected.

Since the content creation apparatus 10 of the second embodiment can insert media data into a part of the time period to allow insertion, the time range for inserting media data can be selected freely by users.

Next, a modified example of the second embodiment will be described. In a content creation apparatus 10 of the modified example, media data inserted during a time period to allow insertion is not played back as overlapped with the fixed media, but media data is inserted in the form that a playback time period for media data is interrupted into a time period to allow insertion.

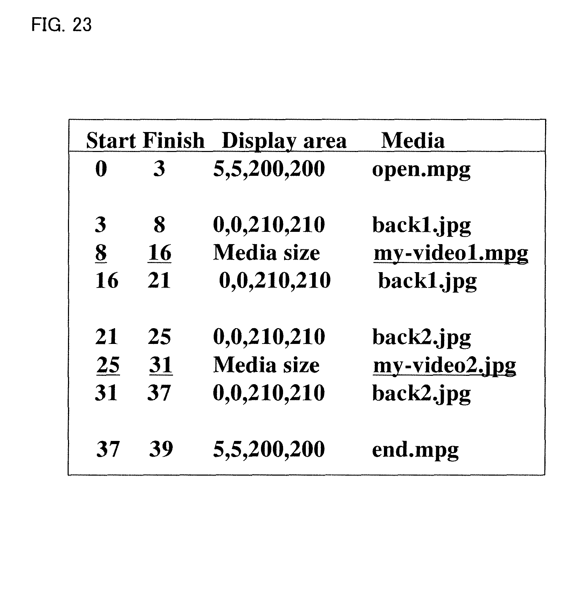

Fig. 23 is a diagram illustrating a content scenario 24 which playback time for media data is created in the time period to allow insertion. The content scenario 24 shown in Fig. 23 is inserted with media data of 'my-video1.mpg' in the time from 8 to 16 seconds. As apparent from comparison with the template scenario 16 for the template shown in Fig. 15, media data of eight seconds is inserted from the point of playback time of 8 seconds during playback time for 'back1.jpg' that was initially from 3 to 13 seconds (it is indicated by an underline shown in Fig. 23). Thus, playback time for 'back1.jpg' is from 3 to 8 seconds and from 16 to 21 seconds. In association therewith, playback start time for 'back2.jpg' recedes for eight seconds. Similarly, media data of six seconds is also inserted into 'back2.jpg' , and the total playback time for the template is prolonged for 8 + 6 = 14 seconds.

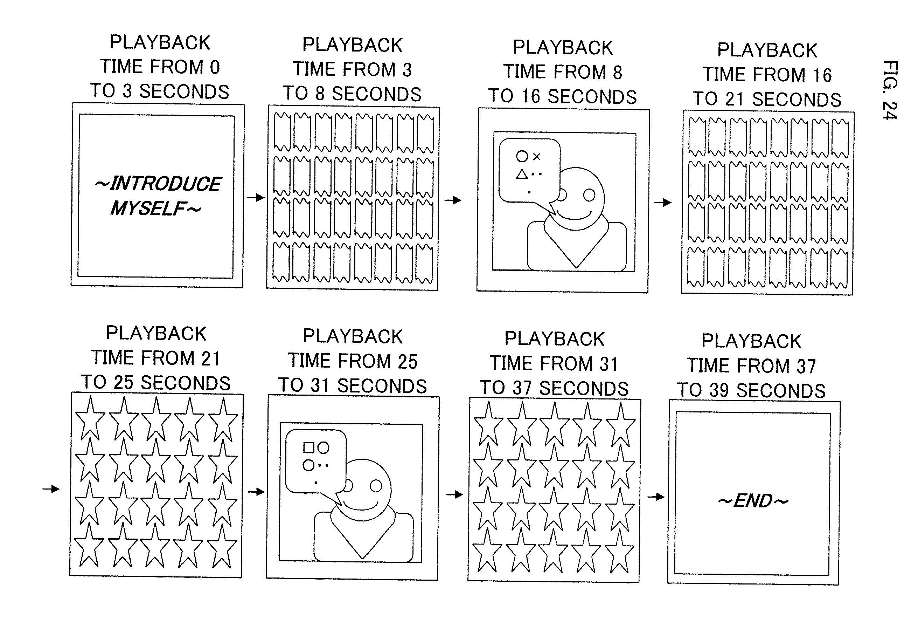

Fig. 24 is diagrams illustrating exemplary screens when the contents 24 shown in Fig. 23 are played back. First, during playback time from 0 to 3 seconds, an image of '-introduce myself-' is displayed. During playback time from 3 to 8 seconds and during playback time from 16 to 21 seconds, a background image of 'back1.jpg' is played back and displayed, and media data of 'my-video1.mpg' selected by the user is played back and displayed during playback time from 8 to 16 seconds therebetween. As apparent from Fig. 24, during playback time from 8 to 16 seconds, media data is not displayed as overlapped with the background image, but the media data is interrupted into the template by that playback time. During playback time from 21 to 25 seconds and during playback time from 31 to 37 seconds, a background image of 'back2.jpg' is played back and displayed, and media data of 'my-video2.mpg' selected by the user is played back and displayed during playback time from 25 to 31 seconds therebetween. Finally, during playback time 37 to 39 seconds, an image of '-end-' is displayed.

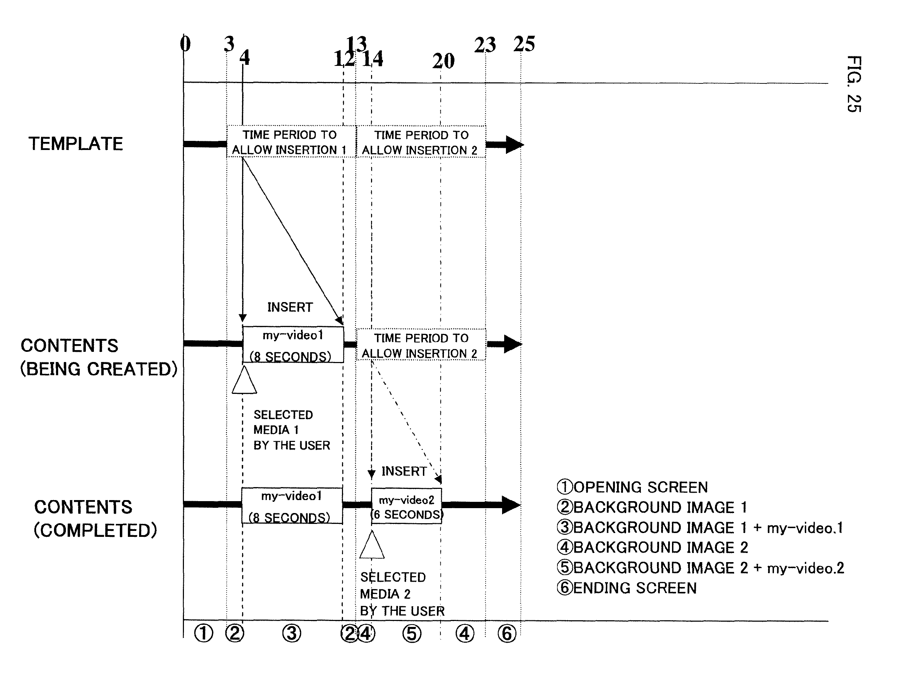

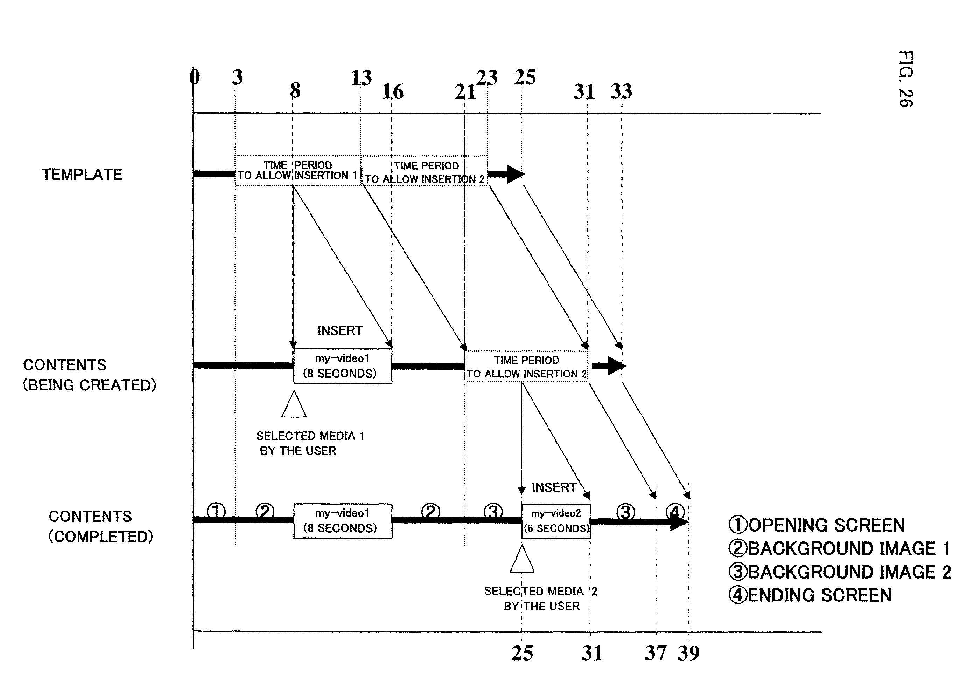

Figs. 25 and 26 are diagrams illustrative of the difference between the second embodiment and the modified example thereof. As shown in Fig. 25, in the content creation apparatus 10 of the second embodiment, media data is inserted within the time period to allow insertion and is played back along with the template. In the content creation apparatus 10 of the modified example, playback of the inserted media data is started from a certain point of time within the time period to allow insertion (here, playback time of 8 seconds and playback time of 25 seconds), and playback of the template is temporarily stopped during that period. Then, after playback of media data is finished, the continued template is played back. Therefore, the total time for the created contents 24 is prolonged by the playback time for the inserted media data.

In addition, in the modified example, instead of the time period to allow insertion having time width, point of time without the time width can be defined as insertable time. Thus, when media data is inserted during insertable time for the template, contents can be created that media data starts to be played back from the insertable time.

As discussed above, the content creation apparatus according to the invention 10 has been described by taking the embodiments, but the invention is not limited to the embodiments above.

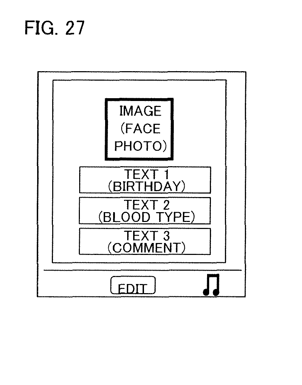

In the embodiment described above, the configuration is described in which selection of the edit object is accepted on the screen to select the edit object (Fig. 10B). However, selection of the edit object may be accepted by a different scheme. For example, as shown in Fig. 27, focus that is put to an insertable part to be an edit object may be switched on a screen where playback is temporarily stopped to select an edit object.

In the embodiments described above, the example has been described that moving picture, still images, and text are inserted as media data, but other media data such as voice may be inserted. When media data is voice, a music note, for example, is displayed to notify a user that voice data is insertable as shown in Fig. 27.

In the embodiments described above, the example has been described that moving picture and still images already acquired or taken are inserted as the user media. However, the configuration may be formed in which an image pickup module such as a camera is initiated at timing to start the insertable part to insert a moving picture and a still image into a template as being shot.

In the embodiments described above, the example has been described that text data inputted by the user is inserted when the type of media data to be inserted is text. However, the configuration may be formed in which media data is selected from text data stored in the user media storing module 18 beforehand also when media data is text.

In the embodiments described above, the configuration has been formed in which the edit button is displayed all the time during playback of the template to determine whether there is the insertable part for the template in accordance with pressing down the edit button. However, the configuration may be formed in which the edit button is displayed only during playback of the insertable part.

In the embodiments described above, the confirmation button is displayed when media data to be inserted into the insertable part is selected. However, the confirmation button may be not displayed until media data is selected for all the insertable parts in the template.

For the description method of the template scenario and the content scenario in the embodiments above, SMIL (W3C standards) that can describe layouts and playback time for multiple items of media can be used, but it is not limited to this.

As discussed above, the preferred embodiments of the invention which can be considered at the present time are described, but it should be understood that various modifications can be done with respect to the embodiments and it is intended that all the modifications in the scope of the true spirit of the invention are included in the claims.

### Industrial Applicability

As described above, the invention has an excellent advantage that media data matched with the multimedia template can be selected while the multimedia template to be created is confirmed, and is useful as the content creation apparatus and the like which create multimedia contents.

## Claims

1. A content creation apparatus comprising:
a playback means which plays back a multimedia template into which media data can be inserted;
a media data accepting means which accepts a user's instruction relating to selection of media data to be inserted into the multimedia template during playback of the multimedia template by the playback means;
a control means which inserts media data selected through the media data accepting means to the multimedia template and allows the playback means to play back the multimedia template; and
a multimedia content creating means which creates multimedia contents based on the multimedia template and confirmed media data in accordance with confirmation of the media data selected through the media data accepting means.

2. The content creation apparatus according to claim 1, wherein the playback means stops playback of the multimedia template from time when a user instructs starting selection of media data to time when selection of media data is completed.

3. The content creation apparatus according to claim 1, further comprising a means which encourages a user to select media data relating to a time period to allow insertion during playback of the multimedia template.

4. The content creation apparatus according to claim 3, wherein the means which encourages selection stops playback of the multimedia template at time to start the time period to allow insertion.

5. The content creation apparatus according to claim 3, wherein the means which encourages selection presents a user that it is a time period to allow accepting selection of media data during the time period to allow insertion.

6. The content creation apparatus according to claim 3, wherein the means which encourages selection displays information about potential media data to be selectable on a screen.

7. The content creation apparatus according to claim 1, wherein the playback means displays an area into which media data is inserted as an image on a multimedia template that is being played back.

8. The content creation apparatus according to claim 7, wherein the media data accepting means accepts insertion of media data into the insertion area in accordance with selection of an image in the insertion area displayed in the insertion area.

9. The content creation apparatus according to claim 1, wherein the control means shifts a position to start playback of media data selected through the media data accepting means from a top of the media data by an amount of elapsed time to playback the multimedia template from time to start playback of a part to allow insertion of media data to time to accept media data by the media data accepting means.

10. The content creation apparatus according to claim 1, wherein the media data accepting means can accept an instruction to use a moving picture or a still image that is being shot by an image pickup means as media data to be inserted into the multimedia template.

11. A content creation method comprising steps of:
playing back a multimedia template into which media data can be inserted;
accepting an input of a user's instruction relating to selection of media data to be inserted into the multimedia template during playback of the multimedia template;
inserting media data selected by the inputted user's instruction to the multimedia template and playing back the multimedia template; and
creating multimedia contents based on the multimedia template and confirmed media data in accordance with confirmation of the media data selected by the inputted user's instruction.

12. A program which creates multimedia contents, the program allowing a computer to implement processes of:
playing back a multimedia template into which media data can be inserted;
accepting an input of a user's instruction relating to selection of media data to be inserted into the multimedia template during playback of the multimedia template;
inserting media data selected by the inputted user's instruction to the multimedia template and playing back the multimedia template; and
creating moving picture contents based on the multimedia template and confirmed media data in accordance with confirmation of the media data selected by the inputted user's instruction.
